# EUROPÄISCHE PATENTANMELDUNG

(11) **EP 0 752 343 A2**
(43) Veröffentlichungstag der Anmeldung: **08.01.1997**
(21) Anmeldenummer: 96106505.9
(22) Anmeldetag: 25.04.1996
(51) Int. Cl.: B60R 11/02

(54) **Vorrichtung zur Befestigung eines Monitors in einem Fahrzeug**

(30) Priorität: 04.07.1995 DE 29510797 U
(71) Anmelder: Blaupunkt-Werke GmbH, D-31132 Hildesheim (DE)
(72) Erfinder: Kanne, Reinhard, 03226 Sibbesse (DE)

(57) **Zusammenfassung**

Die Erfindung betrifft eine Vorrichtung zur Befestigung eines Monitors in einem Fahrzeug. Es ist bekannt, eine an der Dachkonstruktion befestigbare Haltevorrichtungen mit einem ersten und zweiten Halteteil zu versehen und am Gehäuse des Monitors ein erstes und zweites Halteglied vorzusehen, die mit dem ersten und zweiten Halteteil koppelbar sind. Die Erfindung schlägt vor, als Haltevorrichtung ein an der Dachkonstruktion des Fahrzeuges zu befestigendes Trägerteil (19) mit einem ersten (3) und zweiten Halteteil (4) vorzusehen, wobei das erste Halteglied (5) des Monitorgehäuses (2) in das erste Halteteil (3) einhängbar und das zweite Halteglied (6) danach durch ein lösbares Verbindungsmittel mit dem zweiten Halteteil (4) verbindbar ist. Zu diesem Zweck ist das erste Halteteil (3) als offene Rinne (3) und das zweite Halteteil (4) als parallel zur Rinne (3) verlaufende mit ersten Rastmitteln (10) versehene Fläche ausgebildet, während das erste Halteglied (5) als in die Rinne (3) einhängbares stangenförmiges Teil (21) und das zweite Halteglied (6) als eine zum zweiten Halteteil (4) parallel verlaufende korrespondierende Schiene (6) mit zweiten Rastmitteln (10,11) ausgebildet ist.

## Beschreibung

### Stand der Technik

Die Erfindung geht von einer Befestigungsvorrichtung für einen Monitor in einem Fahrzeug nach der im Oberbegriff des Anspruchs 1 angegebenen Gattung aus. In großräumigen, der Personenbeförderung dienenden Fahrzeugen ist es bereits seit längerem üblich, der Ausstrahlung von Unterhaltungsprogrammen und Informationssendungen diendende Monitore zu verwenden. Es ist zweckmäßig, einen Monitor mit einem 15-Zoll-Bildschirm an der Dachkonstruktion des Fahrzeuges zu befestigen, damit auch weiter entfernt sitzenden Passagieren die Sicht auf das Monitorbild ermöglicht wird. Oft wird der Monitor aus Platzgründen über dem Eingangsbereich oder über den Gängen des Fahrzeuges angebracht. Eine neue Vorschrift verlangt dabei eine bestimmte Durchgangshöhe für die Passagiere im Fahrzeug. Es ist bekannt, zur Befestigung des Monitors im Fahrzeug eine Haltevorrichtung an der Dachkonstruktion anzubringen, die mit dem Monitor verbunden werden kann. Es ist ferner bekannt, dabei Halterungen zu verwenden, die den Abstand zwischen der Oberseite des Monitorgehäuses und der am Fahrzeugdach befestigten Haltevorrichtung verkleinern, um die vorgeschriebene Durchgangshöhe im Fahrzeug auch bei Verwendung eines 15-Zoll-Bildschirmes einhalten zu können.

Eine solche durch die DE-GM 9304257 bekannte, gattungsgemäße Lösung besteht aus einer Haltevorrichtung mit zwei als Halteteile dienenden Leisten, die jeweils mit einem abgesetzten Teil versehen sind. Am Gehäuse des Monitors befinden sich an zwei Stellen Ausnehmungen, die bei Einbau des Monitors den Eintritt des abgesetzten Teiles der Leisten in das Monitorgehäuse und ein Einschieben des Monitorrahmens über die Leistenvorsprünge ermöglichen. Dabei müssen die abgesetzten Teile zugleich in die Ausnehmungen eingeführt werden. Dieses Einbauverfahren hat zwangsläufig zur Folge, daß gleichzeitig mit dem Einschieben des Monitorgehäuses über die Leistenvorsprünge, die elektrischen Verbindungen zwischen Monitor und Haltevorrichtungen hergestellt werden müssen. Aus diesem Grund wird an einer Leiste ein Steckerteil fest angebracht, welches sich beim Einsetzen des Monitors in die an der Dachkonstruktion des Fahrzeuges angebrachte Haltevorrichtung automatisch in ein am Monitor angebrachtes zweites Steckerteil einschiebt. Als nachteilig ist hierbei anzusehen, daß das Steckerteil sehr präzise gefertigt sein muß, um ein problemloses, paßgenaues Einsetzen des Monitors zu ermöglichen. Außerdem werden die elektrischen Anschlüsse bei häufigem Ein- und Ausbau des Monitors durch die Befestigung an den Leisten stark beansprucht und verschleißen schneller. Weiterhin muß als nachteilig angesehen werden, daß das Monitorgehäuse nach Einsetzen in die beiden Leisten zusätzlich durch ein weiteres Halteglied gesichert werden muß, um ein Herausrutschen aus der Haltevorrichtung zu verhindern. Bei Ausbau des Monitors muß das Befestigungsmittel des zusätzlichen Haltegliedes erst wieder gelöst werden, bevor der Monitor aus den Leisten herausgezogen werden kann. Ein weiterer gravierender Nachteil des bisherigen Standes der Technik besteht in den der Aufnahme der Leisten diendenen Ausnehmungen des Monitorgehäuses. Ein offenes Monitorgehäuse hat zur Folge, daß Staub und Schmutzpartikel durch die Öffnungen in den Monitor eindringen und zu Kurzschlüssen in den empfindlichen elektronischen Bauelementen des Monitors führen können.

### Vorteile der Erfindung

Die erfindungsgemäße Vorrichtung zur Befestigung eines Monitors nach den kennzeichnenden Merkmalen des Anspruchs 1 hat demgegenüber den Vorteil, daß das Monitorgehäuse zunächst nur mit dem ersten Halteglied an dem entsprechenden Halteteil der an der Dachkonstruktion des Fahrzeuges angebrachten Haltevorrichtung befestigt wird. Der Monteur hat nun beide Hände frei und genügend Platz, um anschließend die elektrischen Verbindung zwischen dem um eine Achse frei schwenkbaren Monitor und der Haltevorrichtung herzustellen. Erst dann wird das Monitorgehäuse zum zweiten Halteteil hingeschwenkt und mit dem zweiten Halteglied am zweiten Halteteil der Haltevorrichtung befestigt. Der Monitor ist nun fest in der vorgeschriebenen Position angebracht, so daß eine zusätzliche Befestigung durch ein weiteres Halteteil unnötig ist. Ein weiterhin mit der Erfindung erzielter Vorteil besteht insbesondere darin, daß ein geschlossenes Monitorgehäuse verwendet wird, welches das Eindringen von Schmutzpartikeln in den Monitor verhindert.

Vorteilhafte Ausgestaltungen der Erfindung sind in den Unteransprüchen 2 bis 10 angegeben. Die Weiterbildung nach Anspruch 2 und 9 ermöglicht ein einfaches Einhängen des Monitorgehäuses in die als Stanzbiegeteil ausgeformte Rinne des Trägerteils. Das nach Anspruch 9 als stabiler Bügel mit zwei seitlichen Haltearmen ausgebildete Halteglied des Monitorgehäuses verhindert dabei eine ungewollte seitliche Verschiebung des in der Rinne pendelnden Monitors, so daß das Monitorgehäuse in dieser Position nur noch durch eine anhebende Bewegung aus der Rinne des Trägerteils ausgehängt werden kann. Nach Herstellung der elektrischen Verbindungen kann der Monitor nun frei in Richtung des Trägerteils geschwenkt werden, bis ein in Schwenkrichtung wirksames Rastmittel nach Anspruch 3 betätigt wird, so daß der Monitor fest am Trägerteil verankert ist. Um ein durch eine versehentliche erneute Betätigung des Rastmittels ausgelöstes Zurückschwenken des Monitors zu verhindern, kann die als Halteglied vorgesehene Schiene des Monitorgehäuses zusätzlich nach Anspruch 4 und 5 durch ein weiteres Verbindungsmittel in seiner Position gesichert werden. Die in Anspruch 6 und 10 vorgesehene weitere Ausgestaltung der Schiene verleihen dem Monitorgehäuse besondere Stabilität.

### Zeichnung

Ein Ausführungsbeispiel der Erfindung ist in der Zeichnung dargestellt und wird in der nachfolgenden Beschreibung näher erläutert. Es zeigt
Figur 1 eine perspektivische Darstellung von Haltevorrichtung und Monitorgehäuse,
Figur 2 eine Draufsicht auf die aus dem Trägerteil geformte Rinne, in welche der Bügel des Monitorgehäuses eingehängt ist.

### Beschreibung des Ausführungsbeispiels

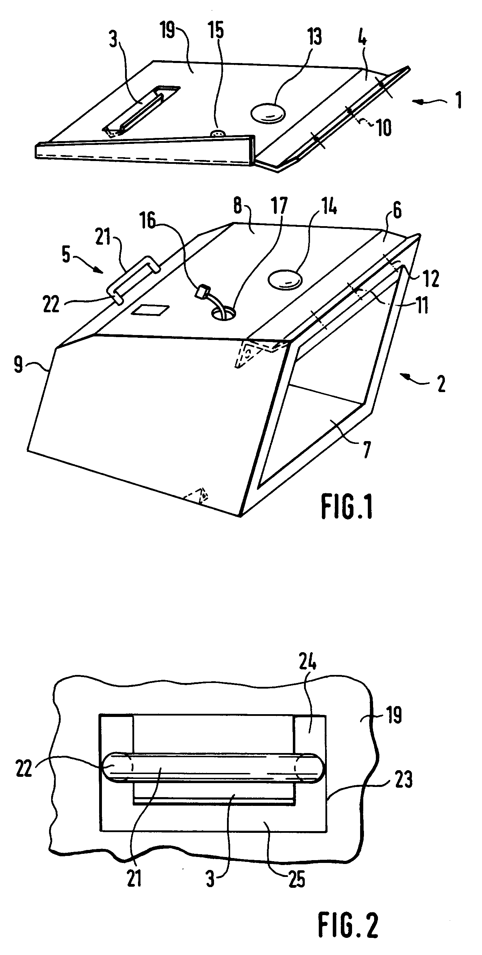

Die in der Figur 1 dargestellte Vorrichtung zur Befestigung eines Monitors besteht aus einer Haltevorrichtung 1 und einem damit verbindbaren Monitorgehäuse 2 mit unter anderem einer Bildschirmöffnung 7, einer Oberseite 8 und einer Rückseite 9. Die Haltevorrichtung 1, die aus einem an der Dachkonstruktion eines Fahrzeuges angebrachten und als Platte ausgebildeten Trägerteil 19 besteht, weist ein erstes Halteteil 3 und ein zweites Halteteil 4 auf. Das erste Halteteil 3 ist als Biegestanzteil aus dem Trägerteil geformt und bildet eine zur Dachkonstruktion des Fahrzeuges hin offene Rinne. Dabei ist die Rinne 3 mit ihrer einen von der Bildschirmöffnung 7 abgewandten Längsseite einstückig mit dem Trägerteil und läßt zumindest an ihrer anderen Längsseite, wie in Figur 2 dargestellt, einen Abstand 25 zum Ausschnitt 23 des Trägerteils frei. Das zweite Halteteil 4 ist als eine zur Rinne parallel verlaufende, zweimal wechselseitig abgewinkelte Fläche 4 als über die Breite des Monitors sich erstreckendes Blechteil an dem der Rinne gegenüberliegenden Ende des Trägerteils 19 angeordnet. Das Monitorgehäuse 2 weist an seiner Oberseite 8 ein erstes Halteglied 5 und ein zweites Halteglied 6 auf. Das erste Halteglied 5 ist als Bügel ausgebildet, bestehend aus einem zur Oberseite 8 des Monitorgehäuses parallelen Stangenteil 21 und zwei seitlichen, sich anschließenden, vom Monitor senkrecht abstehenden Haltearmen 22, die von der Bildschirmöffnung aus gesehen am hinteren Übergangsbereich zwischen Rückwand 9 und Oberseite 8 befestigt sind. An dem Ende der Oberseite 8, welches der Bildschirmöffnung 7 zugewandt ist, befindet sich das zweite Halteglied, welches als zweimal wechselseitig abgewinkelte Schiene 6 ausgebildet ist. Die Schiene ist mit einer ihrer abgewinkelten Längseiten fest mit dem Monitorgehäuse verbunden.

Das Monitorgehäuse wird mit dem Bügel durch den Abstand 25 zwischen Rinne und Trägerteil 19 geschoben und mit dem Stangenteil 21 in die Rinne 3 des an der Dachkonstruktion befestigten Trägerteils eingehängt, wobei die zwei seitlichen vom Monitorgehäuse senkrecht abstehenden Haltearme 22 durch den Abstand 24 zwischen der Breitseite der Rinne und dem Ausschnitt 23 des Trägerteils greifen und dadurch eine längsseitige Verschiebung des Bügels in der Rinne verhindern. In dieser Position ist das Gehäuse dann um eine Drehachse, welche durch Rinne 3 und Bügel 5 bestimmt ist, schwenkbar. Zur Herstellung einer elektrischen Verbindungen zum Monitor kann ein aus einer Ausnehmung 17 an der Gehäuseoberseite 8 herausragendes Kabel mit einem elektrischen Steckerteil 16 in ein weiteres Buchsenteil 15, welches am Trägerteil 19 befestigt ist, eingesteckt werden. Beim Schwenken des Monitorgehäuses in Richtung des Trägerteils tauchen die elektrischen Kabel in die Ausnehmung 17 an der Gehäuseoberseite ein. Das Monitorgehäuse wird so weit in Richtung des Trägerteils geschwenkt, bis ein erstes an der Unterseite des Trägerteils befindliches kugelschalenförmiges Anschlagteil 13 und ein zweites an der Oberseite des Monitorgehäuses befindliches kugelschalenförmiges Anschlagteil 14 einander berühren. Spätestens in dieser Position rasten einander zugeordnete Rastmittel 10 und 11, welche sich an der Schiene 6 einerseits und dem die Fläche 4 bildenden Blechteil andererseits befinden, ineinander ein, so daß der Monitor nun mit beiden Haltegliedern fest am Trägerteil befestigt ist. Als zusätzliche Sicherung, welche ein Zurückschwingen des Monitors aufgrund einer versehentlichen Betätigung der Rastmittel verhindert, wird die Schiene 6, an deren einer abgewinkelten Seite sich Schrauben 12 befinden, mit der Fläche 4 verschraubt.

## Patentansprüche

1. Vorrichtung zur Befestigung eines Monitors in einem Fahrzeug, das eine an der Dachkonstruktion befestigbare Haltevorrichtung (1) aufweist, mit der ein Gehäuse (2) des Monitors verbindbar ist, wobei die Haltevorrichtung (1) ein erstes Halteteil (3) und ein zweites Halteteil (4) aufweist und das Gehäuse ein erstes Halteglied (5) und ein zweites Halteglied (6) besitzt, die mit dem ersten und zweiten Halteteil koppelbar sind, dadurch gekennzeichnet, daß die Haltevorrichtung aus einem an der Dachkonstruktion des Fahrzeuges zu befestigenden Trägerteil (19) besteht, an dem das erste Halteteil (3) und das zweite Halteteil (4) angeordnet sind, und das erste Halteglied (5) in das erste Halteteil (3) einhängbar ist und das zweite Halteglied (6) des Monitorgehäuses danach durch ein lösbares Verbindungsmittel mit dem zweiten Halteteil (4) verbunden wird.

2. Vorrichtung nach Anspruch 1, dadurch gekennzeichnet, daß das erste Halteteil (3) als eine zur Dachkonstruktion hin offene Rinne ausgebildet ist und vom Gehäuse als Halteglied (5) ein zur Oberseite parallel verlaufendes, in die Rinne einhängbares stangenförmiges Teil absteht.

3. Vorrichtung nach Anspruch 2, dadurch gekennzeichnet, daß das zweite Halteteil (4) als eine parallel zur Rinne verlaufende mit einem ersten Rastmittel (10) versehene Fläche ausgebildet ist und das zweite Halteglied (6) eine zu dieser Fläche parallel verlaufende, korrespondierende Schiene ist, die in Schwenkrichtung um das stangenförmige Teil mit einem zweiten Rastmittel (11) als Verbindungsmittel zum Einrasten mit dem ersten Rastmittel (10) bringbar ist.

4. Vorrichtung nach Anspruch 3, dadurch gekennzeichnet, daß als zusätzliche Verbindungsmittel drehbare Verriegelungsmittel (12) vorgesehen sind.

5. Vorrichtung nach Anspruch 4, dadurch gekennzeichnet, daß als drehbare Verriegelungsmittel (12) Schrauben vorgesehen sind.

6. Vorrichtung nach Anspruch 3, dadurch gekennzeichnet, daß die Fläche (4) und die Schiene (6) als zum stangenförmigen Teil (5) bzw. zur Rinne (3) hin abgewinkelte Teile ausgebildet sind.

7. Vorrichtung nach einem der Ansprüche 3 bis 6, dadurch gekennzeichnet, daß das Trägerteil (19) als Platte ausgebildet ist, aus der als erstes Halteteil (3) die Rinne ausgeformt ist und deren eines Ende eine Fläche (4) zur Verbindung mit der Schiene bildet.

8. Vorrichtung nach einem der Ansprüche 3 bis 7, dadurch gekennzeichnet, daß am Trägerteil (19) und/oder Gehäuse (2) im Bereich zwischen Rinne (3) bzw. stangenförmigem Teil (5) und Fläche (4) bzw. Schiene (6) wenigstens ein Anschlagteil (13 oder 14) zur Begrenzung der Annäherung des Gehäuses an das Trägerteil vorhanden ist.

9. Vorrichtung nach Anspruch 2, dadurch gekennzeichnet, daß das stangenförmige Halteglied (5) als Bügel mit zwei seitlichen Haltearmen (22) ausgebildet ist.

10. Vorrichtung nach Anspruch 3, dadurch gekennzeichnet, daß die Schiene (6) als wechselseitig abgewinkelte Schiene ausgebildet ist, deren einer abgewinkelter Teil am Monitorgehäuse (2) befestigt ist und deren anderer abgewinkelter Teil der Verbindung mit dem Trägerteil (19) dient.
